# EUROPEAN PATENT SPECIFICATION

(11) **EP 4 027 426 B1**
(45) Date of publication and mention of the grant of the patent: **03.06.2026**
(21) Application number: 21213580.0
(22) Date of filing: 10.12.2021
(51) Int. Cl.: H01M 10/052, H01M 50/105

(54) **SECONDARY BATTERY CASE AND SECONDARY BATTERY**
SEKUNDÄRBATTERIEGEHÄUSE UND SEKUNDÄRBATTERIE
BOÎTIER DE BATTERIE SECONDAIRE ET BATTERIE SECONDAIRE

(30) Priority: 07.01.2021 KR 20210002204
(43) Date of publication of application: 13.07.2022
(73) Proprietor: LG Energy Solution, Ltd., Seoul 07335 (KR)
(72) Inventor: KIM, Hyun Beom, 34122 Daejeon (KR); CHOI, Kyu Hyun, 34122 Daejeon (KR); MIN, Min Kyu, 34122 Daejeon (KR)
(74) Representative: Goddar, Heinz J.

(56) References cited:
- EP-A1- 3 561 899
- WO-A1-2021/125842
- US-A1- 2019 229 301

## Description

### BACKGROUND OF THE INVENTION

### FIELD OF THE INVENTION

The present invention relates to a secondary battery case and a secondary battery. Particularly, a secondary battery case or a secondary battery is provided, wherein an unnecessarily protruding or deforming region is reduced in the exterior of the secondary battery case to reduce the volume of the secondary battery, thereby reducing a dead space not contributing to the capacity of the secondary battery. Accordingly, it is possible to enhance the energy density, improve inaccurate measurement of the full width of a cell, prevent a crack risk, facilitate the assembly of a battery module, and reduce the costs of thermal resin for cooling the cell.

### DESCRIPTION OF THE RELATED ART

Secondary batteries repeatedly chargeable and dischargeable may be classified into a cylindrical secondary battery, a prismatic secondary battery, a pouch-type secondary battery, or the like, depending on structures and manufacturing methods thereof. Among these secondary batteries, the pouch-type secondary battery generally accommodates an electrode assembly having a structure in which electrodes and separators are alternately arranged within a sheet-shape pouch exterior. US 2019/0229301 A1 and EP 3 561 899 A1 relate to a respective pouch for a secondary battery and to a method and die for forming the pouch. WO 2021/125842 A1, KR 10-2019-0169262 A and KR 10-2020-0176713 A relate to a case for a secondary battery and to a secondary battery.

According to the related art, in order to manufacture the pouch-type secondary battery, a forming process is performed in which a portion of a sheet-shape pouch, corresponding to a surface area of an electrode assembly, is pressed to form a cup 5 having a recessed shape. Then, the electrode assembly is mounted on the cup 5 formed in the pouch. Subsequently, some regions of a peripheral portion 3 formed in a perimeter of the cup 5 in a pouch region are attached to each other to form a sealing portion 4. The sealing portion formed by attaching some regions of the peripheral portion of the pouch cup to each other and a region of the peripheral portion other than the sealing portion are regions which have not been pressed during the forming process.

Here, due to a height difference between the peripheral portion and the sealing portion, which have not been subjected to the forming and pressing process, and the cup, which has been subjected to the forming process, some regions of the peripheral portion and the sealing portion are outside the width of the cup during a folding operation or a degassing operation while the secondary battery is manufactured through pouch design.

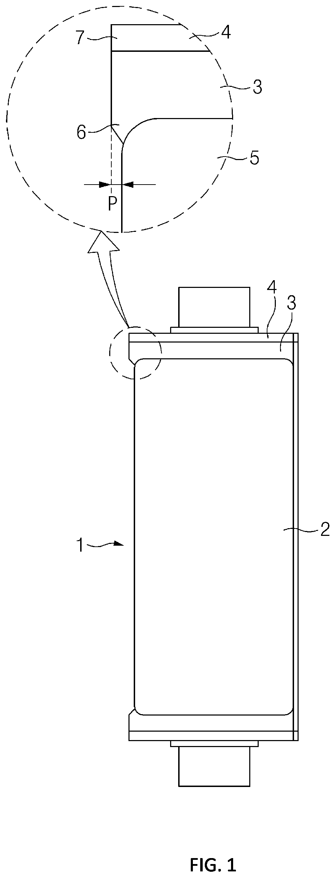

FIG. 1 illustrates a state in which some regions of a peripheral portion 3 and a sealing portion 4, which are formed in each of upper and lower portions of a pouch 2 of a pouch-type secondary battery 1 manufactured according to the related art, protrude by P outside the width of a cup in which an electrode assembly is accommodated.

Such protruding region may be referred to as a bat-ear. The bat-ear is a portion unnecessarily protruding and deforming in the exterior of a secondary battery case, causing an increase in a dead space not contributing to a capacity of the secondary battery. As a result, the energy density of the secondary battery is degraded. Also, the bat-ear causes inaccurate measurement of the full width of a cell, a crack risk, complicates assembly of a battery module, and an increase in costs of thermal resin for cooling the cell.

Further referring to FIG. 1, the bat-ear may be classified into a cup edge bat-ear portion 6 and an end bat-ear portion 7. It is desired that both the cup edge bat-ear portion 6 and the end bat-ear portion 7 be reduced. The aforementioned problems are not overcome by removing only one of the two types of bat-ear portions. Accordingly, methods capable of removing both the cup edge bat-ear portion 6 and the end bat-ear portion 7 have been researched.

### SUMMARY OF THE INVENTION

A secondary battery case as defined in claim 1 and a secondary battery as defined in claim 10 is provided, which may allow for reducing an unnecessarily protruding or deforming region in the exterior of the secondary battery case. This may allow reducing the volume of the secondary battery, thereby reducing a dead space not contributing to the capacity of the secondary battery. Accordingly, it is possible to enhance the energy density, improve inaccurate measurement of the full width of a cell, prevent a crack risk, facilitate the assembly of a battery module, and reduce the costs of thermal resin for cooling the cell.

A secondary battery case may be provided that is configured to accommodate an electrode assembly having a structure in which electrodes and separators are alternately arranged. The secondary battery case may include: a first cup having a recessed shape; a second cup having a recessed shape and provided on one side of the first cup; a first peripheral portion surrounding a perimeter of the first cup; and a second peripheral portion surrounding a perimeter of the second cup. The first peripheral portion may include a first cup-corresponding peripheral portion that corresponds to a width of the first cup. The second peripheral portion may include a second cup-corresponding peripheral portion that corresponds to a width of the second cup. The width of the first cup is greater than a width of the first cup-corresponding peripheral portion. Hereinafter, the specifications of the first cup may also apply accordingly to the second cup in a mirrored manner, unless otherwise indicated or structurally inappropriate.

Specifically, the widths may be determined in a cross-section view along a viewing direction that is perpendicular to said widths and/or a viewing direction parallel to a symmetry axis M (boundary M) between the first cup and the second cup, see below. The first peripheral portion may surround the perimeter of the first cup when the secondary battery case is unfolded. The second peripheral portion may surround the perimeter of the second cup when the secondary battery case is unfolded. The width of the first cup may be greater than a width of the first cup-corresponding peripheral portion when viewed in a cross-sectional view in which the widths of the first cup and the second cup are shown.

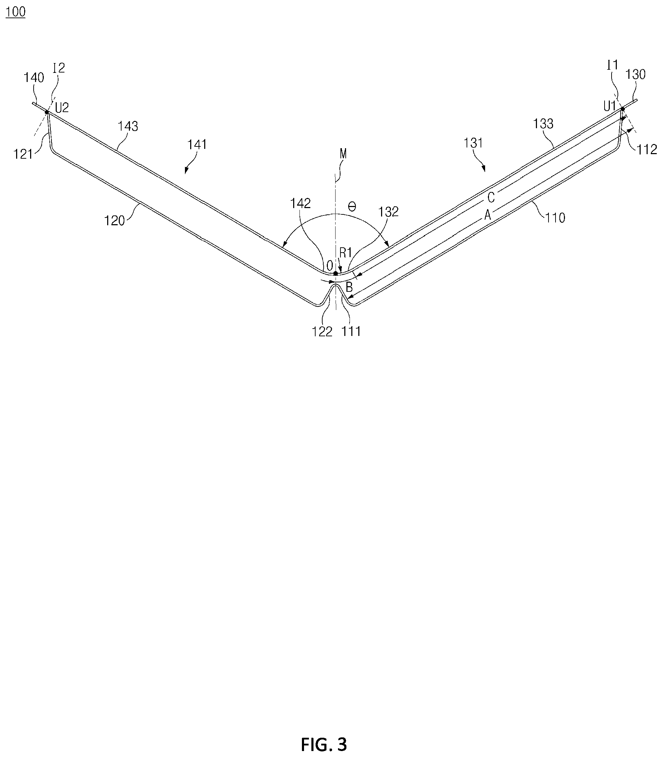

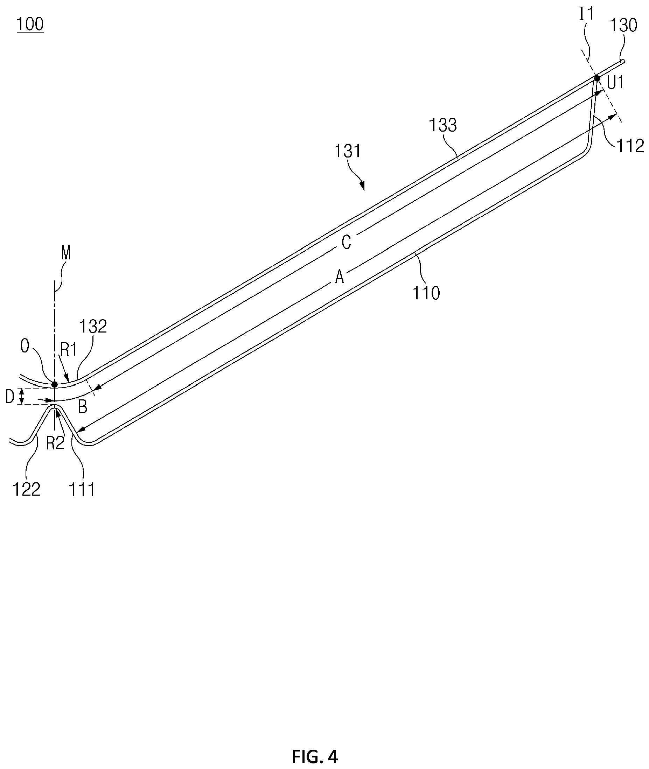

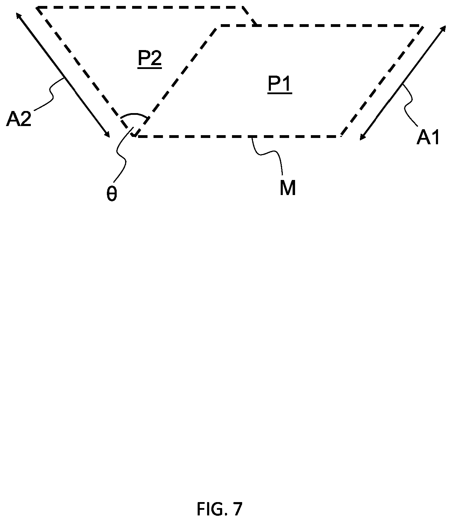

The width of each of the first cup and the second cup as used herein may be a linear measure in a respective width direction. With reference to FIG. 7, the first cup and the second cup may each extend along a respective plane P1, P2 and may not be arranged parallel to each other. The width direction A1 of the first cup may be along the first plane P1. The width direction A2 of the second cup may be along the second plane P2. The width direction A1 of the first cup and the width direction A2 of the second cup may not be collinear. The width directions A1, A2 of the first cup and the second cup may be offset from each other by a specific angle, for example by θ as mentioned below also with reference to FIG. 3 and 4.

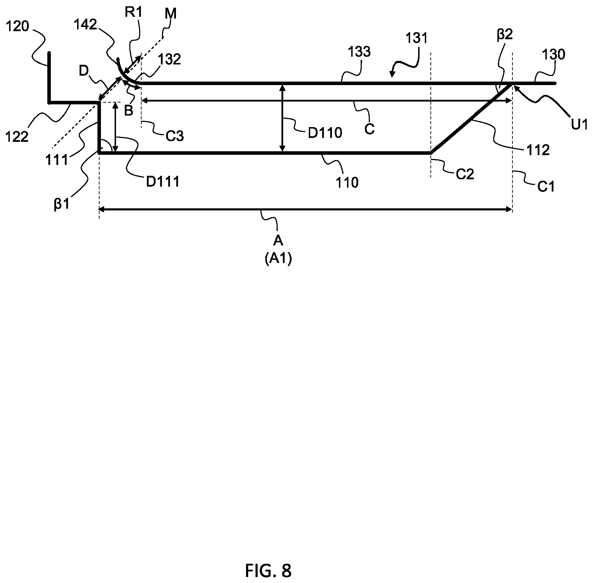

The first cup and the second cup may be connected to each other along (or separated from each other by) a boundary, which is labelled as M in FIG. 7 and 8 may also be referred to as a symmetry axis. The boundary M may be linear and may represent a line along which the secondary battery case is folded. The width direction of each of the first cup and the second cup may be perpendicular to the boundary M.

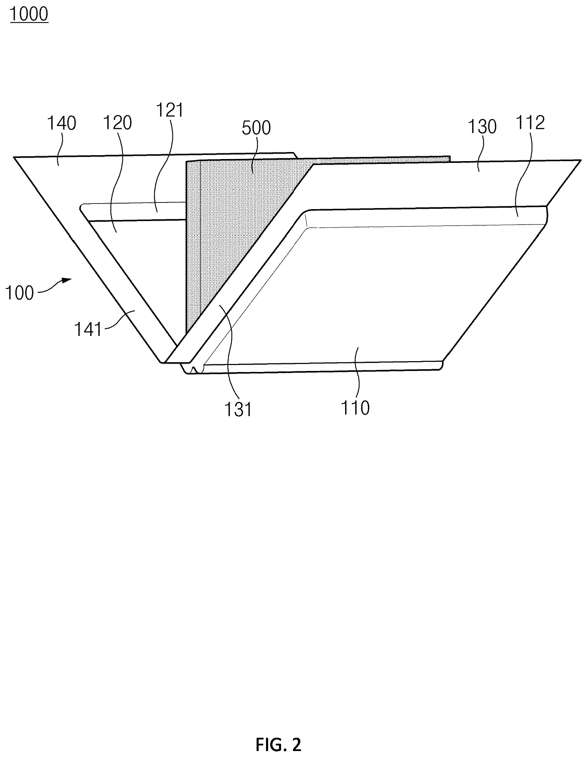

The first cup may be formed such to have a tray-like recessed shape (have the shape of a tray) with a recessed bottom extending along the first plane P1 surrounded by wall portions (sidewalls) extending to (and connected with) the first peripheral portion, see FIG. 2 in connection with FIG. 7. The recessed bottom of the first cup may be (substantively) flat along the first plane P1. In particular, the first cup may have the shape of a rectangular tray, and the first peripheral portion may surround the first cup on two sides or on three sides of the rectangular tray. The first peripheral portion may not extend on an inner side of the first cup facing the boundary M.

The second cup may be formed such to have a tray-like recessed shape (have the shape of a tray) with a recessed bottom extending along the second plane P2 surrounded by wall portions (sidewalls) extending to (and connected with) the second peripheral portion, see FIG. 2 in connection with FIG. 7. The recessed bottom of the second cup may be (substantively) flat along the second plane P2. In particular, the second cup may have the shape of a rectangular tray, and the second peripheral portion may surround the second cup on two sides or on three sides of the rectangular tray. The second peripheral portion may not extend on an inner side of the second cup facing the boundary M. Accordingly, the first cup and the second cup may be formed in connection with each other on an inner side along the boundary, and no peripheral portions may be formed therebetween.

The width of the first cup may be a distance from a left wall portion of the first cup to a first reference vertical line which is perpendicular to the first peripheral portion. Further, the distance may be a line that passes through an upper edge (end point) of a right wall portion of the first cup. The width of the first cup-corresponding peripheral portion is a distance from a peripheral connection region (point), at which the first peripheral portion meets the second peripheral portion, to a plane U1 (point U1) on the first peripheral portion corresponding to the upper edge (end point) of the right wall portion of the first cup. Here, the expressions "left" and "right" refers to the orientation as shown in the drawings for the simplicity of explanation. The left wall portion of the first cup may refer to a sidewall, an inner sidewall, of the first cup that is proximal to the boundary M between the first cup and the second cup. The right wall portion of the first cup may refer to a sidewall, an outer sidewall, opposite to the left wall portion, which is a sidewall of the first cup distal from the boundary M between the first cup and the second cup.

An example of the first cup 110 is illustrated in FIG. 8. The first cup 110 comprises a left wall portion 111, which refers to a sidewall 111 (an inner sidewall 111) of the first cup 110 that is formed along or proximal to the boundary M between the first cup 110 and the second cup 120. The first cup 110 further comprises a right wall portion 112, which refers to a sidewall 112 (an outer sidewall 112) of the first cup 110 that is formed opposite to the inner sidewall 111 and distal from the boundary M between the first cup 110 and the second cup 120. Herein, the terms left wall portion of the first cup and inner sidewall of the first cup may be used interchangeably, unless indicated otherwise. Also, right wall portion of the first cup and outer sidewall of the first cup may be used interchangeably, unless indicated otherwise.

Similarly, a left wall portion 121 and a right wall portion 122 of the second cup 120, as discussed in detail below, may refer to the orientation of the drawings for the simplicity of the explanation. Although not explicitly shown in FIG. 8, the right wall portion 122 of the second wall 120 may refer to an inner sidewall 122 of the second cup 120 proximal to the boundary M between the first cup 110 and the second cup 120. The left wall portion 121 of the second wall 120 may refer to an outer sidewall 121 of the second cup 120 distal from the boundary M between the first cup 110 and the second cup 120 and opposite to the inner sidewall 122 of the second cup 120, see also FIG. 3. Herein, the terms right wall portion of the second cup and inner sidewall of the second cup may be used interchangeably, unless indicated otherwise. Also, left wall portion of the second cup and outer sidewall of the second cup may be used interchangeably, unless indicated otherwise.

With reference further to FIG. 8, the inner sidewall 111 of the first cup 110 may extend from a bottom (which may be a planar bottom) of the first cup 110 in a tilted manner to form an angle β1. The angle β1 formed between the inner sidewall 111 of the first cup 110 and the bottom of the first cup 110 is not generally limited. Specific example for the angle β1 may be about 90°, between 45° and 135°, or between 60° and 120°, or between 70° and 110°, or between 80° and 100°, or between 85° and 95°.

The outer sidewall 112 of the first cup 110 may be tilted by an angle β2 with respect the first peripheral portion 130, which may extend parallel to the bottom of the first cup 110. The angle β2 may be an acute angle. For example, the angle β2 may be at least 5°, at least 10°, at least 15°, at least 20°, or at least 30°. The angle β2 may be further be at 30°, at 40°, at 50°, at 60°, at 70°, at 80°, or at 85° or below. As illustrated in FIG. 8, the outer sidewall 112 of the first cup 110 may extend between planes C1 and C2 that are perpendicular to the width direction A1 of the first cup 110, wherein the plane C1 represents a plane where the outer sidewall 112 is joint with the first peripheral portion 130 (at intersection U1), and the plane C2 represents a plane where the outer sidewall 112 is joint with the bottom of the first cup 110. The width A of the first cup 110 may be measured between the plane C1 and the inner sidewall 111 of the first cup 110. A region, in which the first peripheral portion is connected to the second peripheral portion, is formed in a round shape having a predetermined radius (R1) of curvature, see for example FIG. 8. The first cup-corresponding peripheral portion includes a first curved portion having a round shape and a first straight portion having a straight shape. The first curved portion and the first straight portion of the first peripheral portion may be connected to each other without overlapping. Hereinafter, the specifications of the first peripheral portion, including the first cup-corresponding peripheral portion, may also apply accordingly to the second peripheral portion and the second cup-corresponding peripheral portion in a mirrored manner, unless otherwise indicated or structurally inappropriate.

As best shown in FIG. 2, the first peripheral portion 130 may comprise a portion (no reference sign in the drawings) that extends along the outer sidewall 112 of the first cup 110, and the first cup-corresponding peripheral portion 131, also referred to herein as a width portion 131 of the first peripheral portion 130, that extends along the width direction A1. As best shown in FIG. 3 and 8, the width portion 131 of the first peripheral portion 130 may be divided into the first curved portion 132 and the first straight portion 133 at a plane C3 that intersects the width portion 131. The first curved portion 132 may have a rounded shape with a curvature radius R1 and may extend from the plane C3 to the boundary M where it meets a second curved portion 142 of the width portion 141 of the second peripheral portion 140. The first curved portion 132, together with the second curved portion 142, may facilitate the folding of the secondary battery case 100. The first straight portion 133 may be provided as a planar portion extending between the plane C3 and the plane C1. In particular, the width portion 131 of the first peripheral portion 130 may terminate at the plane C3 so that the first straight portion 133 also terminates at the plane C3, see FIG. 8. The width (A) of the first cup may be greater than a sum of a width (B) of the first curved portion and a width (C) of the first straight portion. With reference to FIG. 3-5 and 8, the width A of the first cup 110 may be measured as a straight distance between the plane C1 and the inner sidewall 111 of the first cup 110. In examples where the inner sidewall 111 is tilted, the width A of the first cup 110 may be measured with respect to an edge between the inner sidewall 111 and the bottom of the first cup, or with respect to an upper edge of the inner sidewall 111 of the first cup 110 (e.g., where the inner sidewall 111 meets the inner sidewall of the second cup 120). The width B of the first curved portion 132 may be measured along the first curved portion 132 between the plane C3 and the boundary M. The width C of the first straight portion 133 may be measured along the first straight portion 133 between the plane C3 and the plane C1. With reference to FIG. 3 and 8, this particular relation may be achieved by configuring at least one of the following, individually and/or in combination: a predetermined angle θ, a location of the plane C3, a distance D between the first curved portion 132 and the inner sidewall 111, a depth D110 of the first cup 110, and a height D111 of the inner sidewall 111 of the first cup 110.

When viewed in the cross-sectional view, the first cup-corresponding peripheral portion and the second cup-corresponding peripheral portion form a predetermined angle (θ) and have a V shape.

The predetermined angle (θ) may be about 130 degrees to about 170 degrees.

When viewed in the cross-sectional view, a distance (D) between the peripheral joint region (or peripheral connection point), at which the first peripheral portion meets the second peripheral portion, and a bridge region (or bridge plane, or bridge line), at which a left wall portion of the first cup is connected to a right wall portion of the second cup, may be about 1 mm or less.

When viewed in the cross-sectional view, a region, in which a left wall portion of the first cup is connected to a right wall portion of the second cup, may be formed in a round shape having a predetermined radius (R2) of curvature, and the predetermined radius (R2) of curvature may be less than about 2 mm.

When viewed in the cross-sectional view, the width of the second cup may be greater than a width of the second cup-corresponding peripheral portion.

The width of the second cup may be a distance from a right wall portion of the second cup to a second reference vertical line which is perpendicular to the second peripheral portion and passes through an upper end point of a left wall portion of the second cup, and the width of the second cup-corresponding peripheral portion may be a distance from a peripheral joint region, at which the first peripheral portion meets the second peripheral portion, to a point on the second peripheral portion corresponding to the upper end point of the left wall portion of the second cup.

A region, in which the first peripheral portion is connected to the second peripheral portion, may be formed in a round shape having a predetermined radius (R1) of curvature, and the second cup-corresponding peripheral portion may include a second curved portion which is formed by a portion of the round shape and a second straight portion which is other than the second curved portion and has a straight shape.

The width of the second cup may be greater than a sum of a width of the second curved portion and a width of the second straight portion.

According to another aspect, there is provided a secondary battery including: the secondary battery case as disclosed herein; an electrode assembly inserted into the secondary battery case; and an electrolyte accommodated together with the electrode assembly within the secondary battery case.

### BRIEF DESCRIPTION OF THE DRAWINGS

The above and other aspects, features and other advantages of the present invention will be more clearly understood from the following detailed description taken in conjunction with the accompanying drawings, in which:
- FIG. 1: is a view illustrating a structure of a secondary battery manufactured according to the related art;
- FIG. 2: is a conceptual perspective view illustrating a state of a secondary battery in which an electrode assembly is being accommodated in a secondary battery;
- FIG. 3: is a cross-sectional view illustrating a secondary battery case according to Embodiment 1;
- FIG. 4: is an enlarged cross-sectional view for showing in detail a width of a first cup in the cross-sectional view of FIG. 3;
- FIG. 5: is a perspective view showing a state before the secondary battery case according to Embodiment 1 is folded;
- FIG. 6: is a perspective view showing a state after the secondary battery case of FIG. 5 according to Embodiment 1 is folded;
- FIG. 7: is a perspective view illustrating geometric relations between the first cup and the second cup;
- FIG. 8: is a detailed schematic view of a secondary battery case.

### DETAILED DESCRIPTION OF THE PREFERRED EMBODIMENT

Hereinafter, examples are described in detail with reference to the accompanying drawings so as to be easily carried out by a person skilled in the art. However, the present invention may be implemented in various different forms, and is neither limited nor restricted to the following embodiments. Each of the features as above described may also apply to any of the embodiments described hereinafter.

For the sake of clarity, parts irrelevant to the description are omitted, and descriptions related to well-known functions or configurations are omitted so as not to unnecessarily obscure the subject matter. Herein, when reference numerals are given to components in the drawings, the same or similar components will be designated by the same or similar reference numerals throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### EMBODIMENT 1

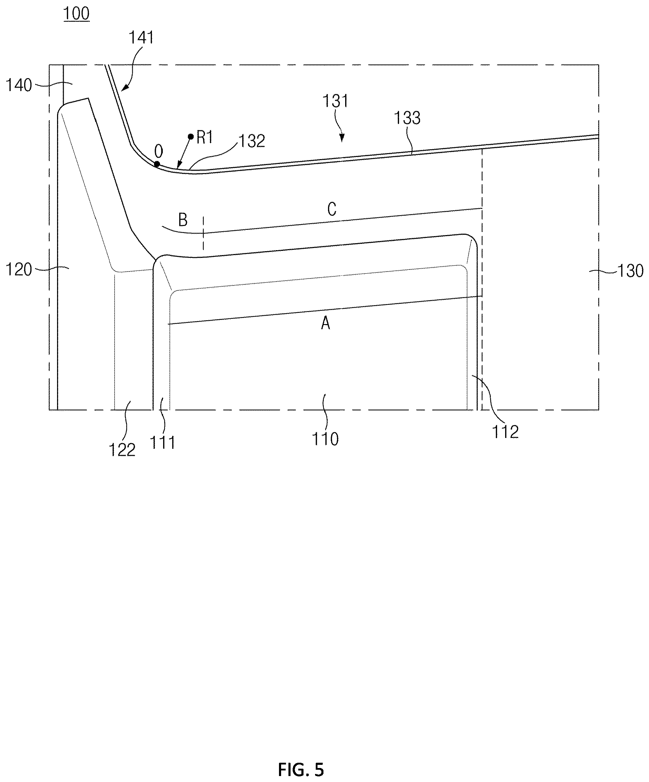

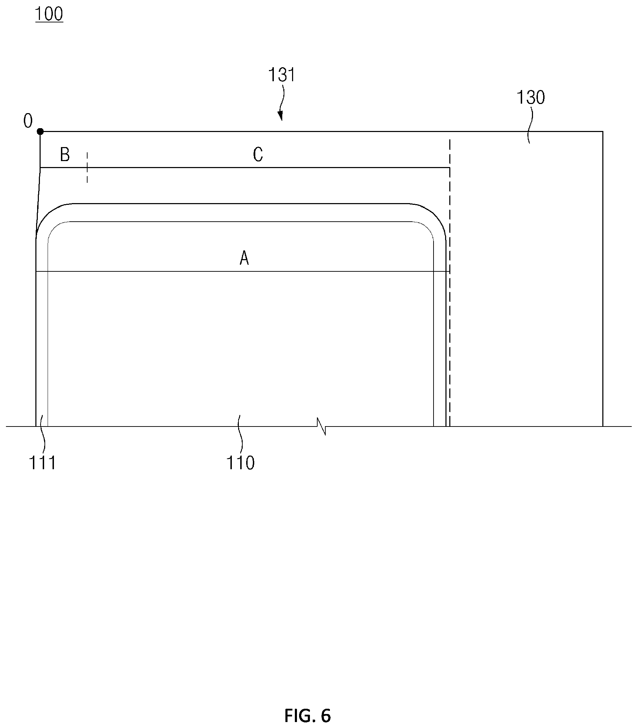

FIG. 2 is a conceptual perspective view illustrating a state of a secondary battery in which an electrode assembly is being accommodated in a secondary battery case. FIG. 3 is a cross-sectional view illustrating a secondary battery case according to Embodiment 1. FIG. 4 is an enlarged cross-sectional view for showing in detail a width of a first cup in the cross-sectional view of FIG. 3. FIG. 5 is a perspective view showing a state before the secondary battery case according to Embodiment 1 is folded. FIG. 6 is a perspective view showing a state after the secondary battery case of FIG. 5 according to Embodiment 1 is folded.

Referring to FIGS. 2 to 4, a secondary battery case 100 according to Embodiment 1 may be a secondary battery case 100 capable of accommodating an electrode assembly having a structure in which electrodes and separators are alternately arranged. Particularly, the secondary battery case 100 may be a pouch case in a pouch-type secondary battery 1000. The secondary battery case 100 according to Embodiment 1 may include a first cup 110, a second cup 120, a first peripheral portion 130, and a second peripheral portion 140.

Each of the first cup 110 and the second cup 120 may be a portion which is formed in a pouch and has a recessed shape. The second cup 120 may be provided on one side of the first cup 110. when the case is folded, the first cup 110 and the second cup 120 may be joined to form an inner space. An electrode assembly 500 may be accommodated in this inner space (see FIG. 2).

The first peripheral portion 130 of the secondary battery case 100 may be a portion which surrounds the perimeter of the first cup 110 when the case is unfolded. The second peripheral portion 140 may be a portion which surrounds the perimeter of the second cup 120. As illustrated in FIGS. 2 and 3, the first peripheral portion 130 and the second peripheral portion 140 may be in contact with each other at a peripheral joint region O.

In the specification, a "state in which the case is unfolded" may represent a state when the case is spread out by removing predetermined adhesion present in the case and then left without receiving any artificial force.

The first peripheral portion 130 may include a first cup-corresponding peripheral portion 131 that corresponds to a width of the first cup 110. The second peripheral portion 140 may include a second cup-corresponding peripheral portion 141 that corresponds to a width of the second cup 120.

Also, when viewed in a cross-sectional view of FIG. 3 or 4 in which the widths of the first cup 110 and the second cup 120 are shown, a width A of the first cup 110 may be greater than a width of the first cup-corresponding peripheral portion 131 in the secondary battery case 100 according to Embodiment 1.

Specifically, the width of the first cup 110 may be a distance from a left wall portion 111 of the first cup 110 to a first reference vertical line (plane) I1, which corresponds to the plane C1 in FIG. 8, which is perpendicular to the first peripheral portion 130 and passes through an upper end point of a right wall portion 112 of the first cup 110. The width of the first cup 110 may be a width illustrated as A in FIG. 4.

The width of the first cup-corresponding peripheral portion 131 is a distance from a peripheral joint region O, at which the first peripheral portion 130 meets the second peripheral portion 140, to a point U1 on the first peripheral portion 130 corresponding to the upper end point of the right wall portion 112 of the first cup 110. The width of the first cup-corresponding peripheral portion 131 may be a width of a route along the first peripheral portion 130 from O to U1 in FIG. 3 or 4.

The first cup-corresponding peripheral portion 131 may include a curved portion and a straight portion. Particularly, referring to FIG. 4, a region, in which the first peripheral portion 130 is connected to the second peripheral portion 140, is formed in a round shape having a predetermined radius R1 of curvature, and the first cup-corresponding peripheral portion 131 includes a first curved portion 132 which is formed by a portion of the round shape and a first straight portion 133 which is other than the first curved portion 132 and has a straight shape. The width of the first curved portion 132 may be a width illustrated as B in FIG. 4. The width of the first straight portion 133 may be a width illustrated as C in FIG. 4. In this case, the width of the first cup-corresponding peripheral portion 131 may be a sum of the width B of the first curved portion 132 and the width C of the first straight portion 133.

Thus, in the secondary battery case 100 according to Embodiment 1, the width A of the first cup 110 may be greater than the sum of the width B of the first curved portion 132 and the width C of the first straight portion 133. This may represent that the sum of the width B of the first curved portion 132 and the width C of the first straight portion 133 is less than the width A of the first cup 110.

With the above configuration, a bat-ear, which is an unnecessarily protruding or deforming region, may be reduced in the exterior of the secondary battery case 100 to reduce the volume of the secondary battery 1000. Accordingly, a dead space not contributing to the capacity of the secondary battery 1000 may be reduced to enhance the energy density.

FIG. 5 is a view before the secondary battery case 100 is folded, and FIG. 6 is a view showing a state after the secondary battery case 100 is folded.

The secondary battery case 100 is configured such that the width A of the first cup 110 is greater than the sum of the width B of the first curved portion 132 and the width C of the first straight portion 133. This may represent that the sum of the width B of the first curved portion 132 and the width C of the first straight portion 133 is less than the width A of the first cup 110. In this case, as illustrated in FIG. 6, a portion of B+C is indented inward (in the right direction in FIG. 6) from the outer boundary of a cup portion. Thus, the bat-ear may be reduced. That is, the peripheral portions are tightly pulled inward, and thus, the bat-ear may be reduced or removed.

Particularly, in this case, there may be a significant effect in which the end bat-ear portion 7 is reduced or removed (refer to FIG. 1 for the end bat-ear portion 7). When the bat-ear is removed, the dead space described above may be reduced, and the energy density may be enhanced. Moreover, it is possible to obtain effects of improving inaccurate measurement of the full width of the cell, preventing the crack risk, facilitating the assembly of the battery module, and reducing the costs of thermal resin for cooling the cell.

In the secondary battery case 100 according to Embodiment 1, the features of the configuration shown in the first cup 110 and the first peripheral portion 130 may be applied to the second cup 120 and the second peripheral portion 140.

Particularly, when viewed in a cross-sectional view in which the widths of the first cup 110 and the second cup 120 are shown, the width of the second cup 120 may be greater than the width of the second cup-corresponding peripheral portion 141.

Here, the width of the second cup 120 may be a distance from a right wall portion 122 of the second cup 120 to a second reference vertical line (plane) I2 which is perpendicular to the second peripheral portion 140 and passes through an upper end point of a left wall portion 121 of the second cup 120.

Also, the width of the second cup-corresponding peripheral portion 141 may be a distance from the peripheral joint region O, at which the first peripheral portion 130 meets the second peripheral portion 140, to a point U2 on the second peripheral portion 140 corresponding to the upper end point of the left wall portion 121 of the second cup 120.

The region, in which the first peripheral portion 130 is connected to the second peripheral portion 140, may be formed in the round shape having the predetermined radius R1 of curvature, and the second cup-corresponding peripheral portion 141 may include a second curved portion 142 which is formed by a portion of the round shape and a second straight portion 143 which is other than the second curved portion 142 and has a straight shape. In the secondary battery case 100 according to Embodiment 1, particularly, the width of the second cup 120 may be greater than a sum of a width of the second curved portion 142 and a width of the second straight portion 143. This may represent that the sum of the width of the second curved portion 142 and the width of the second straight portion 143 is less than the width of the second cup 120.

With the above configuration, as described above, the unnecessarily protruding or deforming region may be reduced in the exterior of the secondary battery case 100 to enhance the energy density.

The configuration shown on the first cup 110 and the first peripheral portion 130 and the configuration shown on the second cup 120 and the second peripheral portion 140 may be symmetric with respect to a symmetry axis M. However, the present invention is not limited thereto, and an asymmetric configuration may be applied to the present invention.

### EMBODIMENT 2

Embodiment 2 is different from Embodiment 1 in that an additional configuration capable of reducing a bat-ear is added to a secondary battery case.

Embodiment 2 will be described with a focus on the differences, and the features common to Embodiment 1 will be omitted as much as possible. That is, it is obvious that features not described in Embodiment 2 may be regarded as the features of Embodiment 1 if necessary.

Referring to FIG. 3, when viewed in the cross-sectional view of a secondary battery case 100 according to Embodiment 2, a first cup-corresponding peripheral portion 131 and a second cup-corresponding peripheral portion 141 form a predetermined angle θ and have a V shape. Also, the predetermined angle θ may be about 130 degrees to about 170 degrees. For reference, in this case, the angle formed by a first peripheral portion 130 and a second peripheral portion 140 may also be θ.

As the angle formed by the first cup-corresponding peripheral portion 131 and the second cup-corresponding peripheral portion 141 is smaller, the bat-ear may be reduced effectively. Usually during a folding operation, some regions of a peripheral portion and a sealing portion get out of the width of a cup to form the bat-ear. As θ is smaller, a folding amount is reduced. Thus, an amount of the bat-ear may be reduced.

However, when θ is less than about 130 degrees, the angle between a right wall portion 112 of a first cup 110 and a bottom portion of the first cup 110 increases. Thus, a dead space may be enlarged in an outer region of the cup. That is, a space may be wasted because the dead space is increased due to the inclination of the right wall portion 112 of the first cup 110.

Also, when θ is greater than about 170 degrees, a width B of a first curved portion 132 may be excessively increased, thus causing an increase in the bat-ear. Particularly, an end bat-ear portion 7 may further protrude. Thus, the angle θ formed by the first cup-corresponding peripheral portion 131 and the second cup-corresponding peripheral portion 141 may be about 130 degrees to about 170 degrees.

Also, referring to FIG. 4, when viewed in the cross-sectional view of the secondary battery case 100 according to Embodiment 2, a distance D between a peripheral joint region O, at which the first peripheral portion 130 meets the second peripheral portion 140, and a bridge region, at which a left wall portion 111 of the first cup 110 is connected to a right wall portion 122 of a second cup 120, may be about 1 mm or less. As the distance D increases, a cup edge bat-ear portion 6 may further protrude. Thus, it is desirable that the distance D is about 1 mm or less. Also, when D is about 0 mm, the cup edge bat-ear portion 6 may be removed. That is, when D is about 0 mm, the cup edge bat-ear portion 6 may not occur.

Also, referring to FIG. 4, when viewed in the cross-sectional view of the secondary battery case 100 according to Embodiment 2, a region, in which a left wall portion 111 of the first cup 110 is connected to a right wall portion 122 of the second cup 120, may be formed in a round shape having a predetermined radius R2 of curvature. In this case, the predetermined radius R2 of curvature may be less than about 2 mm.

As the radius R2 of curvature increases, the effect of increasing the distance D may occur. Also, as the radius R2 of curvature decreases, the effect of decreasing the distance D may occur. Thus, as the radius R2 of curvature increases, the cup edge bat-ear portion 6 may further protrude. Accordingly. R2 may be less than about 2 mm, and a protrusion amount of the cup edge bat-ear portion 6 may be reduced.

When the protrusion amount of the cup edge bat-ear portion 6 is reduced, an unnecessarily protruding or deforming region may be reduced in the exterior of the secondary battery case 100. Accordingly, a dead space not contributing to the capacity of a secondary battery 1000 may be reduced to enhance the energy density. Moreover, it is possible to obtain effects of improving inaccurate measurement of the full width of the cell, preventing the crack risk, facilitating the assembly of the battery module, and reducing the costs of thermal resin for cooling the cell.

### EMBODIMENT 3

FIG. 2 is a conceptual perspective view illustrating a state of a secondary battery in which an electrode assembly is being accommodated in a secondary battery case according to an embodiment.

Embodiment 3 is different from Embodiment 2 and Embodiment 3 in that a secondary battery 1000 manufactured by using the secondary battery case 100 described above in Embodiment 1 and Embodiment 2 is disclosed.

Embodiment 3 will be described with a focus on the differences, and the features common to Embodiment 1 and Embodiment 2 will be omitted as much as possible. That is, it is obvious that features not described in Embodiment 3 may be regarded as the features of Embodiment 1 and Embodiment 2 if necessary.

Referring to FIGS. 2 and 3, the secondary battery 1000 according to Embodiment 3 may include a secondary battery case 100, an electrode assembly 500, and an electrolyte (not shown). Here, the secondary battery case 100 may be the same as the secondary battery case 100 described above in Embodiment 1 and Embodiment 2.

The electrode assembly 500 may be inserted into the secondary battery case 100, and the electrode assembly 500 may be accommodated together with the electrolyte within the secondary battery case 100. The electrode assembly 500 and the electrolyte are accommodated within the secondary battery case 100, and then the secondary battery case 100 is folded such that a first cup 110 and a second cup 120 face each other. Subsequently, when a first peripheral portion 130 and a second peripheral portion 140 are sealed, the secondary battery 1000 may be manufactured.

In the secondary battery 1000 according to Embodiment 3, a bat-ear may be reduced or may not occur. Particularly, both a cup edge bat-ear portion 6 and an end bat-ear portion 7 may be reduced or may not occur. Also, either the cup edge bat-ear portion 6 or the end bat-ear portion 7 may be reduced or may not occur.

Accordingly, an unnecessarily protruding or deforming region may be reduced in the exterior of the secondary battery 1000, and a dead space not contributing to the capacity of the secondary battery 1000 may be reduced. As a result, the energy density may be enhanced.

In the secondary battery case and the secondary battery according to the present invention, the unnecessarily protruding or deforming region is reduced in the exterior of the secondary battery case to reduce the volume of the secondary battery, thereby reducing the dead space not contributing to the capacity of the secondary battery. Accordingly, it is possible to enhance the energy density, improve inaccurate measurement of the full width of the cell, prevent the crack risk, facilitating the assembly of the battery module, and reduce the costs of thermal resin for cooling the cell.

Although the present invention is described by specific embodiments and drawings, the present invention is not limited thereto, and various changes and modifications may be made by a person skilled in the art to which the present invention pertains within the technical idea of the present invention as defined by the scope of the appended claims.

## Claims

1. A secondary battery case (100) configured to accommodate an electrode assembly having a structure in which electrodes and separators are alternately arranged, the secondary battery case (100) comprising:
a first cup (110) having a recessed shape;
a second cup (120) having a recessed shape and provided on one side of the first cup (110);
a first peripheral portion (130) surrounding a perimeter of the first cup (110); and
a second peripheral portion (140) surrounding a perimeter of the second cup (120),
wherein the first peripheral portion (130) comprises a first cup-corresponding peripheral portion (131) that corresponds to a width (A) of the first cup (120), and the second peripheral portion (140) comprises a second cup-corresponding peripheral portion (141) that corresponds to a width of the second cup (120), wherein the first cup-corresponding peripheral portion (131) and the second cup-corresponding peripheral portion (141) form a predetermined angle (θ) and have a V shape when viewed in a direction perpendicular to the width (A) of the first cup (110) and the width of the second cup (120) before the secondary battery case (100) is folded,
wherein the width (A) of the first cup (120) is greater than a width (B, C) of the first cup-corresponding peripheral portion (131), wherein the width (B, C) of the cup-corresponding peripheral portion (131) is a distance from a peripheral connection point (O), at which the first peripheral portion (130) meets the second peripheral portion (140), to a point (U1) on the first peripheral portion (130) connected to the outer sidewall (112) of the first cup (110), and wherein the width (A) of the first cup (110) is a distance from an inner sidewall (111) of the first cup (110) to a first plane (C1) where the outer sidewall (112) is joint with the first peripheral portion (130) at the point (U1), wherein the first plane (C1) is perpendicular to the first peripheral portion (130) and passes through an upper end point of an outer sidewall (112) of the first cup (110), and wherein the inner sidewall (111) is formed proximal to a boundary (M) between the first cup (110) and the second cup (120), wherein the outer sidewall (112) is formed opposite to the inner sidewall (111) and distal from the boundary (M), wherein a region, in which the first peripheral portion (130) is connected to the second peripheral portion (140), is formed in a round shape having a predetermined radius (R1) of curvature, and
the cup-corresponding peripheral portion (131) of first peripheral portion (130) comprises a first curved portion (132) which is formed by a portion of the round shape and a first straight portion (133) which has a straight shape.

2. The secondary battery case of claim 1, wherein the width (A) of the first cup (110) is greater than a sum of a width (B) of the first curved portion (132) and a width (C) of the first straight portion (131).

3. The secondary battery case of any of the preceding claims, wherein the predetermined angle (θ) is 130 degrees to about 170 degrees.

4. The secondary battery case of any of the preceding claims, wherein a distance (D) between the peripheral connection point (O) and a bridge region, at which the inner sidewall (111) of the first cup (110) is connected to the inner sidewall (122) of the second cup (120) is 1 mm or less.

5. The secondary battery case of any of the preceding claims, wherein a region where an inner sidewall (111) of the first cup (110) is connected to an inner sidewall (122) of the second cup (120) has a round shape with a predetermined radius (R2) of curvature, and the predetermined radius (R2) of curvature is less than 2 mm.

6. The secondary battery case of any of the preceding claims, wherein the width of the second cup (120) is greater than a width of the cup-corresponding peripheral portion (141) of the second peripheral portion (140).

7. The secondary battery case of claim 6, wherein the width of the second cup (120) is a distance from an inner sidewall (122) of the second cup (120) to a reference plane (I2) which is perpendicular to the second peripheral portion (140) and passes through an upper end point of an outer sidewall (121) of the second cup (120), and
the width of the cup-corresponding peripheral portion (141) of the second peripheral portion (140) is a distance from a peripheral connection point (O), where the first peripheral portion (130) meets the second peripheral portion (140), to a point (U2) on the second peripheral portion (140) connecting to the upper end point of the outer sidewall (121) of the second cup (120).

8. The secondary battery case of claim 7, wherein
a region, in which the first peripheral portion (130) is connected to the second peripheral portion (140), has a round shape with a predetermined radius (R1) of curvature, and
the cup-corresponding peripheral portion (141) of the second peripheral portion (140) comprises a second curved portion (142) which has a round shape and a second straight portion (143) which has a straight shape.

9. The secondary battery case of claim 8, wherein the width of the second cup (120) is greater than a sum of a width of the second curved portion (142) and a width of the second straight portion (143).

10. A secondary battery comprising:
the secondary battery case (100) of claim 1;
an electrode assembly inserted into the secondary battery case (100); and
an electrolyte accommodated together with the electrode assembly within the secondary battery case (100).

## Patentansprüche

1. Sekundärbatteriegehäuse (100), das zur Aufnahme einer Elektrodenanordnung mit einer Struktur ausgebildet ist, in der Elektroden und Separatoren abwechselnd angeordnet sind, wobei das Sekundärbatteriegehäuse (100) umfasst:
eine erste Schale (110) mit einer vertieften Form;
eine zweite Schale (120) mit einer vertieften Form, die an einer Seite des ersten Schale (110) vorgesehen ist;
einen ersten Umfangsabschnitt (130), der einen Umfang der ersten Schale (110) umgibt; und
einen zweiten Umfangsabschnitt (140), der einen Umfang der zweiten Schale (120) umgibt,
wobei der erste Umfangsabschnitt (130) einen zur ersten Schale korrespondierenden Umfangsabschnitt (131) umfasst, der einer Breite (A) der ersten Schale (120) entspricht, und wobei der zweite Umfangsabschnitt (140) einen zur zweiten Schale korrespondierenden Umfangsabschnitt (141) umfasst, der einer Breite der zweiten Schale (120) entspricht, wobei der zur ersten Schale korrespondierende Umfangsabschnitt (131) und der zur zweiten Schale korrespondierende Umfangsabschnitt (141) einen vorbestimmten Winkel (θ) bilden und eine V-Form aufweisen, wenn sie in einer Richtung senkrecht zur Breite (A) der ersten Schale (110) und zur Breite der zweiten Schale (120) betrachtet werden, bevor das Sekundärbatteriegehäuse (100) zusammengeklappt wird,
wobei die Breite (A) der ersten Schale (120) größer ist als eine Breite (B, C) des zur ersten Schale korrespondierenden Umfangsabschnitts (131), wobei die Breite (B, C) des schalenkorrespondierenden Umfangsabschnitts (131) ein Abstand von einem Umfangsverbindungspunkt (O), an dem der erste Umfangsabschnitt (130) auf den zweiten Umfangsabschnitt (140) trifft, zu einem Punkt (U1) auf dem ersten Umfangsabschnitt (130) ist, der mit der äußeren Seitenwand (112) der ersten Schale (110) verbunden ist, und wobei die Breite (A) der ersten Schale (110) ein Abstand von einer Innenwand (111) der ersten Schale (110) zu einer ersten Ebene (C1 ) ist, wobei die äußere Seitenwand (112) mit dem ersten Umfangsabschnitt (130) am Punkt (U1) verbunden ist, wobei die erste Ebene (C1) senkrecht zum ersten Umfangsabschnitt (130) steht und durch einen oberen Endpunkt einer äußeren Seitenwand (112) der ersten Schale (110) verläuft, und, wobei die innere Seitenwand (111) proximal zu einer Grenze (M) zwischen der ersten Schale (110) und der zweiten Schale (120) ausgebildet ist, wobei die äußere Seitenwand (112) gegenüber der inneren Seitenwand (111) und distal von der Grenze ausgebildet ist (M), wobei ein Bereich, in dem der erste Umfangsabschnitt (130) mit dem zweiten Umfangsabschnitt (140) verbunden ist, in einer runden Form mit einem vorbestimmten Krümmungsradius (R1) ausgebildet ist, und
wobei der zur Schale korrespondierende Umfangsabschnitt (131) des ersten Umfangsabschnitts (130) einen ersten gekrümmten Abschnitt (132), der durch einen Teil der runden Form gebildet wird, und einen ersten geraden Abschnitt (133) umfasst, der eine gerade Form aufweist.

2. Sekundärbatteriegehäuse nach Anspruch 1, wobei die Breite (A) der ersten Schale (110) größer ist als die Summe aus einer Breite (B) des ersten gekrümmten Abschnitts (132) und einer Breite (C) des ersten geraden Abschnitts (131).

3. Sekundärbatteriegehäuse nach einem der vorstehenden Ansprüche, wobei der vorbestimmte Winkel (θ) 130 Grad bis etwa 170 Grad beträgt.

4. Sekundärbatteriegehäuse nach einem der vorstehenden Ansprüche, wobei ein Abstand (D) zwischen dem peripheren Verbindungspunkt (O) und einem Brückenbereich, an dem die innere Seitenwand (111) der ersten Schale (110) mit der inneren Seitenwand (122) der zweiten Schale (120) verbunden ist, 1 mm oder weniger beträgt.

5. Sekundärbatteriegehäuse nach einem der vorstehenden Ansprüche, wobei ein Bereich, in dem eine innere Seitenwand (111) der ersten Schale (110) mit einer inneren Seitenwand (122) der zweiten Schale (120) verbunden ist, eine runde Form mit einem vorbestimmten Krümmungsradius (R2) aufweist und der vorbestimmte Krümmungsradius (R2) weniger als 2 mm beträgt.

6. Sekundärbatteriegehäuse nach einem der vorstehenden Ansprüche, wobei die Breite der zweiten Schale (120) größer ist als die Breite zur Schale korrespondierenden Umfangsabschnitts (141) des zweiten Umfangsabschnitts (140).

7. Sekundärbatteriegehäuse nach Anspruch 6, wobei die Breite der zweiten Schale (120) ein Abstand von einer inneren Seitenwand (122) der zweiten Schale (120) zu einer Bezugsebene (I2) ist, die senkrecht zum zweiten Umfangsabschnitt (140) steht und durch einen oberen Endpunkt einer äußeren Seitenwand (121) der zweiten Schale (120) verläuft, und
wobei die Breite des zur Schale korrespondierenden Umfangsabschnitts (141) des zweiten Umfangsabschnitts (140) sich über ein Abstand von einem Umfangsverbindungspunkt (O), an dem der erste Umfangsabschnitt (130) auf den zweiten Umfangsabschnitt (140) trifft, bis zu einem Punkt (U2) auf dem zweiten Umfangsabschnitt (140) ist, der mit dem oberen Endpunkt der äußeren Seitenwand (121) der zweiten Schale (120) verbunden ist.

8. Sekundärbatteriegehäuse nach Anspruch 7, wobei
ein Bereich, in dem der erste Umfangsabschnitt (130) mit dem zweiten Umfangsabschnitt (140) verbunden ist, eine runde Form mit einem vorbestimmten Krümmungsradius (R1) aufweist, und
wobei der zur Schale korrespondierende Umfangsabschnitt (141) des zweiten Umfangsabschnitts (140) einen zweiten gekrümmten Abschnitt (142), der eine runde Form aufweist, und einen zweiten geraden Abschnitt (143), der eine gerade Form aufweist, umfasst.

9. Sekundärbatteriegehäuse nach Anspruch 8, wobei die Breite der zweiten Schale (120) größer ist als die Summe aus der Breite des zweiten gekrümmten Abschnitts (142) und der Breite des zweiten geraden Abschnitts (143).

10. Sekundärbatterie, umfassend:
das Sekundärbatteriegehäuse (100) nach Anspruch 1;
eine in das Sekundärbatteriegehäuse (100) eingesetzte Elektrodenanordnung; und
einen Elektrolyten, der zusammen mit der Elektrodenanordnung innerhalb des Sekundärbatteriegehäuses (100) untergebracht ist.

## Revendications

1. Boîtier de batterie secondaire (100) configuré pour contenir un ensemble d'électrode présentant une structure dans laquelle des électrodes et des séparateurs sont agencés de façon alternée, le boîtier de batterie secondaire (100) comprenant :
une première poche (110) ayant une forme évidée ;
une deuxième poche (120) ayant une forme évidée, et agencée sur un côté de la première poche (110) ;
une première partie périphérique (130) entourant un pourtour de la première poche (110) ; et
une deuxième partie périphérique (140) entourant un pourtour de la deuxième poche (120),
la première partie périphérique (130) comprenant une première partie périphérique correspondant à la première poche (131), correspondant à une largeur (A) de la première poche (120), et la deuxième partie périphérique (140) comprenant une deuxième partie périphérique correspondant à la deuxième poche (141), correspondant à une largeur de la deuxième poche (120), la partie périphérique correspondant à la première poche (131) et la partie périphérique correspondant à la deuxième poche (141) formant un angle θ prédéterminé, et présentant une forme en V vus dans une direction perpendiculaire à la largeur (A) de la première poche (110) et la largeur de la deuxième poche (120) avant de plier le boîtier de batterie secondaire (100),
la largeur (A) de la première poche (120) étant supérieure à une largeur (B, C) de la partie périphérique correspondant à la première poche (131), la largeur (B, C) de la partie périphérique correspondant à la première poche (131) étant une distance entre un point de raccordement périphérique (O), auquel la première partie périphérique (130) et la deuxième partie périphérique (140) se rejoignent, et un point (U1) sur la première partie périphérique (130) connecté à la paroi latérale extérieure (112) de la première poche (110), et la largeur (A) de la première poche (110) étant une distance entre une paroi latérale intérieure (111) de la première poche (110) et un premier plan (C1) où la paroi latérale extérieure (112) rejoint la première partie périphérique (130) au point (U1), le premier plan (C1) étant perpendiculaire à la première partie périphérique (130) et passant à travers un point d'extrémité supérieure d'une paroi latérale extérieure (112) de la première poche (110), et la paroi latérale intérieure (111) étant formée à proximité d'une limite (M) entre la première poche (110) et la deuxième poche (120), la paroi latérale extérieure (112) étant formée face à la paroi latérale intérieure (111) et distale de la limite (M), une zone, dans laquelle la première partie périphérique (130) est connectée à la deuxième partie périphérique (140), étant formée avec une forme arrondie présentant un rayon de courbure prédéterminé (R1), et
la partie périphérique correspondant à la poche (131) de la première partie périphérique (130) comprenant une première partie courbe (132) formée par une partie de la forme arrondie et une première partie droite (133) ayant une forme droite.

2. Boîtier de batterie secondaire selon la revendication 1, la largeur (A) de la première poche (110) étant supérieure à une somme d'une largeur (B) de la première partie courbe (132) et d'une largeur (C) de la première partie droite (131)

3. Boîtier de batterie secondaire selon une quelconque des revendications précédentes, l'angle θ prédéterminé mesurant de 130 degrés à environ 170 degrés.

4. Boîtier de batterie secondaire selon une quelconque des revendications précédentes, une distance (D) entre le point de raccordement périphérique (O) et une zone de liaison, à laquelle la paroi latérale intérieure (111) de la première poche (110) est connectée à la paroi latérale intérieure (122) de la deuxième poche (120), mesurant 1 mm ou moins.

5. Boîtier de batterie secondaire selon une quelconque des revendications précédentes, une zone où une paroi latérale intérieure (111) de la première poche (110) est connectée à une paroi latérale intérieure (122) de la deuxième poche (120) présentant une forme arrondie avec un rayon de courbure prédéterminé (R2), le rayon de courbure prédéterminé (R2) mesurant moins de 2 mm.

6. Boîtier de batterie secondaire selon une quelconque des revendications précédentes, la largeur de la deuxième poche (120) étant supérieure à une largeur de la partie périphérique correspondant à la poche (141) de la deuxième partie périphérique (140).

7. Boîtier de batterie secondaire selon la revendication 6, la largeur de la deuxième poche (120) étant une distance entre une paroi latérale intérieure (122) de la deuxième poche (120) et un plan de référence (12), qui est perpendiculaire à la deuxième partie périphérique (140) et passe à travers un point d'extrémité supérieure d'une paroi latérale extérieure (121) de la deuxième poche (120), et
la largeur de la partie périphérique correspondant à la poche (141) de la deuxième partie périphérique (140) étant une distance entre un point de raccordement périphérique (O), où la première partie périphérique (130) et la deuxième partie périphérique (140) se rejoignent, et un point (U2) sur la deuxième partie périphérique (140) se raccordant au point d'extrémité supérieure de la paroi latérale extérieure (121) de la deuxième poche (120).

8. Boîtier de batterie secondaire selon la revendication 7,
une zone, dans laquelle la première partie périphérique (130) est connectée à la deuxième partie périphérique (140), présentant une forme arrondie ayant un rayon de courbure prédéterminé (R1), et
la partie périphérique correspondant à la poche (141) de la deuxième partie périphérique (140) comprenant une deuxième partie courbe (142) présentant une forme arrondie et une deuxième partie droite (143) ayant une forme droite.

9. Boîtier de batterie secondaire selon la revendication 8, la largeur de la deuxième poche (120) étant supérieure à une somme d'une largeur de la deuxième partie courbe (142) et d'une largeur de la deuxième partie droite (143).

10. Batterie secondaire comprenant :
le boîtier de batterie secondaire (100) selon la revendication 1 ;
un ensemble d'électrodes inséré dans le boîtier de batterie secondaire (100) ; et
un électrolyte logé avec l'ensemble d'électrodes dans le boîtier de batterie secondaire (100).
